Europäisches Patentamt

European Patent Office

Office européen des brevets

(11) Veröffentlichungsnummer: **0 184 864**
**B1**

(12) **EUROPÄISCHE PATENTSCHRIFT**

(45) Veröffentlichungstag der Patentschrift: 03.10.90

(21) Anmeldenummer: 85201684.9

(22) Anmeldetag: 15.10.85

(51) Int. Cl.⁵: **F 02 F 3/12,** F 02 B 77/02,
F 02 F 7/00, C 04 B 35/80

(54) Gegossene Bauteile für Brennkraftmaschinen mit eingegossenen Bewehrungskörpern sowie Verfahren zur Herstellung der Verbindung zwischen den Bauteilen und den Bewehrungskörpern.

(30) Priorität: 05.12.84 DE 3444406

(43) Veröffentlichungstag der Anmeldung:
18.06.86 Patentblatt 86/25

(45) Bekanntmachung des Hinweises auf die
Patenterteilung:
03.10.90 Patentblatt 90/40

(84) Benannte Vertragsstaaten:
DE FR GB IT SE

(56) Entgegenhaltungen:
EP-A-0 078 197
EP-A-0 107 349
EP-A-0 110 064
EP-A-0 130 105
FR-A-2 475 534
GB-A-2 106 433

(73) Patentinhaber: KOLBENSCHMIDT
Aktiengesellschaft
Christian-Schmidt-Strasse 8/12 Postfach 1351
D-7107 Neckarsulm (DE)

(72) Erfinder: Sander, Wilfried
Reutlinger Strasse 60
D-7107 Neckarsulm (DE)
Erfinder: Mielke, Siegfried, Dr.
Leipziger Strasse 111
D-7107 Neckarsulm (DE)

(74) Vertreter: Rieger, Harald, Dr.
Reuterweg 14
D-6000 Frankfurt am Main (DE)

Courier Press, Leamington Spa, England.

## Beschreibung

Die Erfindung betrifft gegossene, den Brennraum begrenzende Bauteile für Brennkraftmaschinen, wie Kolben und Zylinderköpfe, aus Leichtmetallwerkstoff bestehend, in deren der Beanspruchung durch Verschleiß und/oder durch hohe thermische Belastung unterliegenden Oberflächenbereichen aus ungewebten keramischen Fasern oder Whiskern gebildete Bewehrungskörper eingegossen sind, wobei die Fasern bzw. Whisker einen Durchmesser von 0,5 bis 5 µm und ein Durchmesser-Längen-Verhältnis von 10 bis 100 besitzen und ein Volumen von 10 bis 50 %, bezogen auf das Gesamtvolumen des Bewehrungskörpers, einnehmen und die offenen Poren der Faserbzw. Whiskerstruktur im beanspruchungsabseitigen Abschnitt mit einer Schicht des Leichtmetallwerkstoffs ausgefüllt sind.

Die erhebliche Steigerung sowohl der spezifischen Leistung als auch der Lebensdauer, Betriebssicherheit und Wirtschaftlichkeit von Brennkraftmaschinen erfordert eine beanspruchungsgerechte Gestaltung ihrer, insbesondere auch der den Brennraum begrenzenden Bauteile, wie Kolben und Zylinderköpfe. Die Beanspruchung des Kolbens setzt sich im wesentlichen zusammen aus der mechanischen Belastung durch den Gasdruck und der thermischen Belastung durch hohes Temperaturniveau sowie Spannungen aus dem Temperaturgradienten. Um die hohe thermische Belastung zu beherrschen, kann der Kolben mit einem Kühlraum versehen werden. Dieser trägt jedoch im allgemeinen nicht zur Verminderung der Wärmespannungen bei, da der Temperaturgradient in der Umgebung des Kühlraums erhöht wird. Im übrigen widerspricht die Anwendung von Kolbenkühlung dem Bestreben, die Abgabe von Verlustwärme aus dem Verbrennungsprozeß an das Kühlmittel und das Schmieröl zu verringern. Das führt andererseits zu hoher thermischer Belastung des Kolbenbodens.

Einem besonders kritischen Beanspruchungszustand unterliegt bei einem Kolben mit Brennraummulde im Kolbenboden der Muldenrand. Durch die beschleunigte Strömung der Verbrennungsgase ist der Wärmeübergang in dieser Zone verstärkt, die Wärmeableitung ist aber behindert. Dadurch steigt die Temperatur des Muldenrandes und führt zusammen mit der großen Tangentialspannung aus der Temperaturverteilung zu einer überelastischen Beanspruchung. Bei Abkühlung durch Laständerung oder Abstellen der Brennkraftmaschine bilden sich Zugeigenspannungen aus. Da dieser Vorgang häufig stattfindet, treten am Muldenrand thermische Ermüdungsrisse auf, die sich zu großer Tiefe erweitern können und bei Kühlraumkolben in den Kühlraum hineinlaufen, was zum Durchblasen der Verbrennungsgase führt.

Anfälligkeit für Verschleiß der Ringnuten am Kolben, insbesondere der obersten Ringnut, mit Bruchgefahr der Kolbenringe besteht, wenn aufgrund der konstruktiven Gesamtauslegung der Brennkraftmaschine die Temperaturen im Ringfeld abnormal hoch liegen, extreme Rückstände bildender Kraftstoff gefahren wird, aus besonderen Gründen das Spiel des Kolbens groß gewählt wurde und dadurch Kippbewegungen ermöglicht werden oder die Luftfilterung, besonders in staubreicher Umgebung, z.B. auf Baustellen, unzulänglich ist.

In begrenztem Umfang können Kolbenboden und Muldenrand durch konstruktive Optimierung und Abbau der Spannungen aus Gaskraft und Temperaturverteilung entlastet werden.

Die Bewehrung des Muldenrandes durch einen eingegossenen nickellegierten Gußeisenring schafft für begrenzte Laufzeit Abhilfe (Fachkunde Kraftfahrtechnik, 2. Aufl., Holland + Josenhans Verlag, Stuttgart 1982, S. 27). Durch bleibende Deformation zeigt sich jedoch nach längerem Betrieb ein Spalt zwischen dem Gußeisenring und dem Kolbenboden. Weitere Nachteile dieser Bewehrung des Muldenrands bestehen in einem Anwachsen von Gewicht und Herstellungskosten des Kolbens. Anstelle des Gußeisenringes ist deshalb ein Ring aus Aluminiumtitanat vorgeschlagen worden (DE-A-3 230 388), der jedoch nur dann eingesetzt werden kann, wenn sich dieser Ring — bedingt durch die Schrumpfverbindung — mit einer ausreichend großen Fläche gegen den ihn umgebenden Kolbenwerkstoff abstützen kann. Auf der Suche nach alternativen Lösungen, die die genannten Nachteile vermeiden, werden auch metallische und metall-keramische Flamm- und Plasmaspritzschichten auf den Kolbenboden aufgetragen (DE-A-3 137 731). Der Schichtaufbau ist jedoch an den scharfen Kanten des Brennraummuldenrandes gestört. Außerdem zeigen die Schichten unzureichende Haftfestigkeiten bei besonderen Belastungsfällen. Ursächlich hierfür sind die hohen thermischen Belastungen mit der Folge allmählicher Entfestigung und Rißbildung sowie der große, entsprechend hohe Spannungen erzeugende Temperaturgradient in der Deckschicht selbst. Schließlich ist auch bekannt (DE-A-2 507 899), Kolbenböden mit einer 30 bis 80 µm dicken Harteloxalschicht zu überziehen, wodurch sich zwar eine deutlich verbesserte Schutzwirkung gegenüber thermischer Ermüdung ergibt, jedoch keine nennenswerte Temperatursenkung erreicht wird. Hinzuweisen ist noch auf einen Kolben (Diesel Progress North America April 1984) mit einer aus Stahlblech bestehenden Abdeckung mit einem beanspruchungsabseitig aufgesinterten Stahldrahtgewebe. Die Abdeckung wird mit dem Kolben im Gießpreßverfahren zusammengegossen. Dieser Kolben besitzt nur begrenzte Wärmedämmung und ein durch die Abdeckung und das Stahldrahtgewebe erhöhtes Gewicht.

Bei der Gefahr des Verschleißes der Ringnuten werden sogenannte Ringträgerkolben eingesetzt, bei denen in den aus einer Aluminiumkolbenlegierung bestehenden Kolbenkörper im Bereich wenigstens der obersten Kolbenringnut ein aus einem Eisenwerkstoff bestehender Ringträger, in den die Kolbenringnut eingestochen ist, über eine intermetallische Verbundschicht eingegossen ist (Technisches Handbuch, Karl Schmidt GmbH, Neckarsulm 1967, S. 106 bis 107). Durch den eingegossenen Ringträger wird das Gewicht des Aluminiumkolbens in nachteiliger Weise erhöht. Eine andere Bewehrung besteht darin, bei einem aus einer Aluminiumlegierung bestehenden Kolben im Bereich des Ringfeldes eine Nut einzustechen und diese nach dem Metallspritzverfahren zunächst mit einer dünnen Zwischenschicht aus Molybdän, Titan, Kobalt, Nickel oder deren Legierungen sowie rostfreiem Stahl auszuspritzen, dann mit einem rostfreien Stahl mit hohem Chromgehalt und einem bestimmten Nickelgehalt aufzufüllen und danach die Ringnuten auszubilden (DE-A-1 400 115). Der Nachteil besteht darin, daß zwischen der Aluminiumlegierung und der aufgespritzten Zwischenschicht eine schlechte Haftfestigkeit besteht.

In der GB-A-2 106 433 ist ein durch Preßgießen hergestellter Leichtmetallkolben beschrieben, in dessen Boden eine Schicht aus Fasern oder Whiskern zur Vermeidung von Rissen eingebettet ist. Schließlich sind gemäß EP-A-0 080 562 zum Schutz gegen Verschleiß und/oder thermische Ermüdungsrisse in Bauteilen aus Leichtmetallwerkstoff ungewebte keramische Fasern mit einem Volumenanteil von 2 bis 10 % eingelagert. Schließlich ist noch auf die EP-A-0 110 064 hinzuweisen, aus der gegossene, den Brennraum begrenzende Bauteile mit eingegossenen Bewehrungskörpern der im ersten Teil des Anspruchs 1 genannten Art bekannt sind. Bei der Herstellung dieser Bauteile wird auf die eine Seite eines aus ungewebten keramischen Fasern oder Whiskern gebildeten Bewehrungskörpers eine Schicht aus einer hitzebeständigen Legierung aufgesprüht. Die andere Seite des Bewehrungskörpers wird unter Druck mit Leichtmetallwerkstoff getränkt, so daß das fertige Bauteil eine Oberflächenschicht aus der hitzebeständigen Legierung, eine Übergangsschicht, bestehend aus hitzebeständiger Legierung, den Fasern oder Whiskern und dem Leichtmetallwerkstoff, und eine Schicht aus dem Leichtmetallwerkstoff mit eingebetteten hitzebeständigen Fasern oder Whiskern aufweist. Verschleißfestigkeit und Wärmedämmung solcher Kolben bzw. Bauteile entsprechen aber nicht den gestellten Anforderungen.

Aufgabe der vorliegenden Erfindung ist es deshalb, gegossene, den Brennraum begrenzende Bauteile für Brennkraftmaschinen, wie Kolben und Zylinderköpfe, mit eingegossenen Bewehrungskörpern, die eine aus ungewebten, keramischen Fasern oder Whiskern gebildete Struktur besitzen, für den Oberflächenschutz gegen Verschleiß und/oder zur Wärmedämmung bereitzustellen, die in einer relativ dünnen oberflächennahen Zone der Bauteile eine Langzeit-Schutzwirkung gegenüber einer Schädigung des darunterliegenden Leichtmetallwerkstoffs des Bauteils gewährleisten.

Gelöst ist diese Aufgabe dadurch, daß die offenen Poren der Faser- bzw. Whiskerstruktur im beanspruchungsseitigen Abschnitt mit einer 1 bis 20 mm dicken Schicht einer eine geringe Porosität aufweisenden gehärteten keramischen Masse und im Übergangsbereich mit einer 0,5 bis 3 mm dicken Schicht aus keramischer Masse und Leichtmetallwerkstoff ausgefüllt sind.

Die offenen Poren des beanspruchungsabseitigen Abschnitts der Faser- bzw. Whiskerstruktur sind vollständig mit dem Leichtmetallwerkstoff des Bauteils getränkt, so daß eine Verbindung zwischen der durch die gehärtete keramische Masse gebildeten Keramikschicht und dem Leichtmetallwerkstoff des Bauteils durch die Fasern bzw. Whisker gewährleistet ist, die sowohl Kräfte senkrecht zur als auch in der Verbindungsebene übertragen kann. Dabei ist vorausgesetzt, daß nach dem Stand der Technik zwischen der keramischen bzw. metallischen Matrix und den Fasern bzw. Whiskern eine ausreichend feste Bindung besteht. Eine zusätzliche Verbindung wird an der vergleichsweise großen Grenzfläche zwischen faser- bzw. whiskerverstärkter keramischer Masse und faser- bzw. whiskerverstärktem Leichtmetallwerkstoff des Bauteils dadurch erzielt, daß der Leichtmetallwerkstoff des Bauteils in die offenen Poren der faser- bzw. whiskerverstärkten Keramikschicht so tief eindringt, daß ergänzend zu den atomaren Bindungskräften an den Grenzflächen die durch die unregelmäßige Form der Poren bedingte mechanische Verklammerung eine Erhöhung der Haftfestigkeit schafft. Durch die Faser- bzw. Whiskerstruktur im Abschnitt der Keramikschicht wird eine deutliche Verbesserung der Haftfestigkeit der Keramikschicht für den Fall erreicht, daß diese als Folge von Überbelastungen, beispielsweise durch zu große Wärmespannungen, rissig werden sollte. Die Fasern bzw. Whisker verhindern oder verzögern zumindest aufgrund ihrer gegenüber der Keramikschicht höheren Festigkeit die Rißausbreitung. Selbst wenn die Risse durch die Keramikschicht durchlaufen sollten, besteht keine Gefahr, daß sich Stücke der Keramikschicht lösen, da ja jedes Stück über Fasern bzw. Whisker und über den in die offenen Poren eingreifenden Leichtmetallwerkstoff des Bauteils fest mit dem gegossenen Bauteil verbunden ist. Ein weiterer Vorteil ist darin zu sehen, daß die Fasern bzw. Whisker eine Angleichung der thermischen Längenausdehnungskoeffizienten von keramischer Masse und Leichtmetallwerkstoff bewirken und somit die mit dem Betrieb zwangsläufig verbundenen Temperaturänderungen zu deutlich geringeren Spannungen in der Verbindungszone der Werkstoffe führen.

Die Fasern bzw. Whisker nehmen zweckmäßigerweise ein Volumen von 10 bis 30 %, bezogen auf das Gesamtvolumen des Bewehrungskörpers, ein und können sowohl regellos als auch in der Weise angeordnet sein, daß sie im beanspruchungsseitigen Abschnitt des Bewehrungskörpers überwiegend parallel zur Oberfläche verlaufen.

Die Faser- bzw. Whiskerstruktur ist im beanspruchungsseitigen Abschnitt auf eine Tiefe von vorzugsweise 3 bis 5 mm mit keramischer Masse getränkt.

Eine vorzugsweise Ausgestaltung der Erfindung besteht darin, daß der Faser- bzw. Whiskervolumenanteil des Bewehrungskörpers in Belastungsrichtung, vorzugsweise kontinuierlich, zunimmt.

Damit die Form der Faser- bzw. Whiskerstruktur beim Eingießen in das Bauteil aus Leichtmetallwerkstoff erhalten bleibt, ist es angebracht, die Fasern bzw. Whisker an ihren Berührungspunkten miteinander zu versintern oder mittels eines anorganischen Klebers zu verkleben.

Es ist von Vorteil, daß die Keramikschicht eine geringe offene Porosität aufweist, über deren Poren während des Tränkens mit dem Leichtmetallwerkstoff die in der Faserbzw. Whiskerstruktur enthaltene Luft entweichen und Leichtmetall in die Poren partiell eindringen kann, um die formschlüssige Verbindung noch zu verstärken.

Um den beanspruchungsabseitigen Abschnitt der Faser- bzw. Whiskerstruktur mit dem Leichtmetallwerkstoff des Bauteils zu tränken, wird der flüssige Leichtmetallwerkstoff unter Druck, beispielsweise durch Gießpressen, Vakuuminfiltration oder dergleichen, angegossen, und der Druck bzw. Unterdruck bis zur Erstarrung des Leichtmetallwerkstoffs aufrechterhalten.

Die Erfindung ist in der Zeichnung beispielhaft dargestellt.

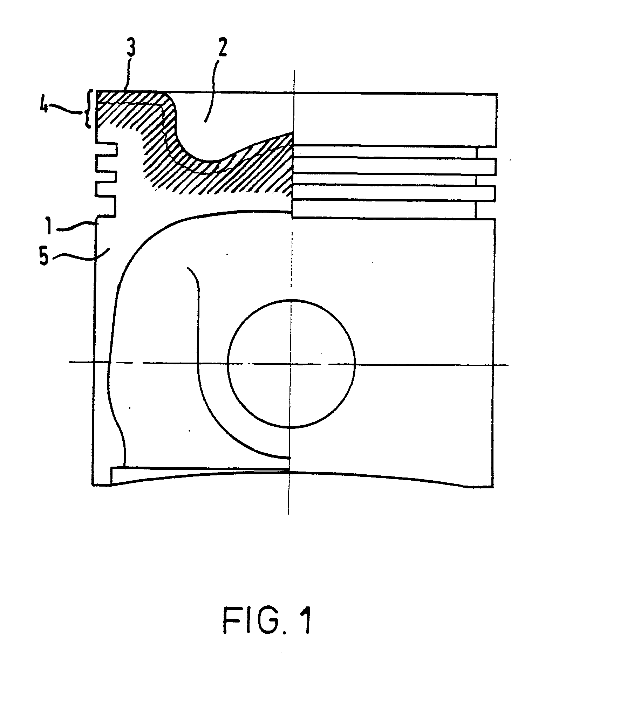

Fig. 1 zeigt einen Teillängsschnitt durch einen Leichtmetallkolben (1) mit Brennraummulde (2) für Dieselmotoren, dessen Kolbenboden (3) und Brennraummulde (2) durch einen eingegossenen erfindungsgemäßen Bewehrungskörper (4) gebildet sind. Der Bewehrungskörper (4) besteht aus einem Faserstrukturkörper mit unregelmäßig angeordneten A1$_2$O$_3$-Fasern mit einem Durchmesser von im Mittel 3 μm und einem Durchmesser-Längen-Verhältnis von 10 bis 100. Die Faserstruktur ist brennraumseitig auf eine Tiefe von 3 bis 5 mm mit ausgehärtetem SiO$_2$ getränkt. Von der Gegenseite her sind die offenen poren der Faserstruktur vollständig mit Leichtmetallwerkstoff (5) gefüllt.

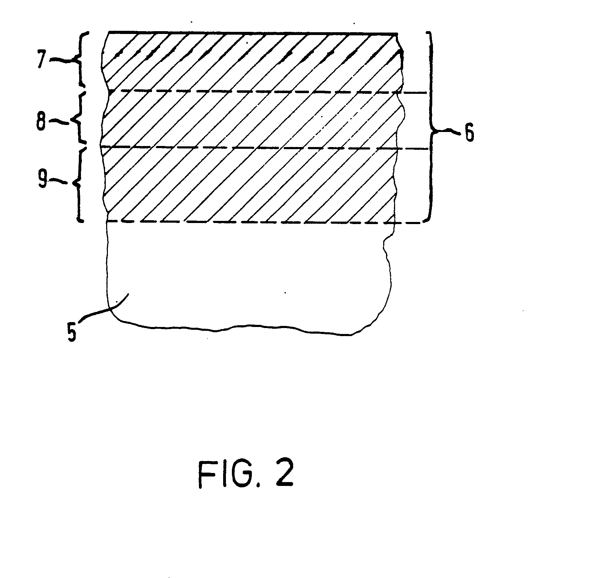

In Fig. 2 ist in einem vergrößerten Ausschnitt aus Fig. 1 der Aufbau des eingegossenen Bewehrungskörpers (4) wiedergegeben. Die schraffiert dargestellte Faserstruktur (6) ist im brennraumseitigen Abschnitt (7) mit der aus SiO$_2$ bestehenden ausgehärteten keramischen Masse getränkt, deren Eindringtiefe unregelmäßig bis in den Übergangsbereich (8) hineinverläuft. Im brennraumabseitigen Abschnitt (9) sind die Poren der Faserstruktur (6) und die offenen Poren der Keramikschicht mit durch Gießpressen infiltriertem Leichtmetall getränkt. Dadurch wird eine ausgezeichnete mechanische Verklammerung zwischen der keramischen Schicht und dem Leichtmetallwerkstoff (5) erreicht.

## Patentansprüche

1. Gegossene, den Brennraum begrenzende Bauteile für Brennkraftmaschinen, wie Kolben (1) und Zylinderköpfe, aus Leichtmetallwerkstoff (5) bestehend, in deren der Beanspruchung durch Verschleiß und/oder durch hohe thermische Belastung unterliegenden Oberflächenbereichen aus ungewebten keramischen Fasern oder Whiskern gebildete Bewehrungskörper (4) eingegossen sind, wobei die Fasern bzw. Whisker einen Durchmesser von 0,5 bis 5 μm und ein Duchmesser-Längen-Verhältnis von 10 bis 100 besitzen und ein Volumen von 10 bis 50 %, bezogen auf das Gesamtvolumen des Bewehrungskörpers, einnehmen und die offenen Poren der Faser- bzw. Whiskerstruktur (6) im beanspruchungsabseitigen Abschnitt (9) mit einer Schicht des Leichtmetallwerkstoffs ausgefüllt sind, dadurch gekennzeichnet, daß die offenen Poren der Faser- bzw. Whiskerstruktur (6) im beanspruchungsseitigen Abschnitt (7) mit einer 1 bis 20 mm dicken Schicht einer eine geringe Porosität aufweisenden gehärteten keramischen Masse und im Übergangsbereich (8) mit einer aus der keramischen Masse und dem Leichtmetallwerkstoff gebildeten Schicht mit einer Dicke von 0,5 bis 3 mm ausgefüllt sind.

2. Gegossene Bauteile nach Anspruch 1, dadurch gekennzeichnet, daß das Volumen der Fasern bzw. Whisker 10 bis 30 %, bezogen auf das Gesamtvolumen des Bewehrungskörpers (4), beträgt.

3. Gegossene Bauteile nach den Ansprüchen 1 und 2, dadurch gekennzeichnet, daß die Fasern bzw. Whisker regellos angeordnet sind.

4. Gegossene Bauteile nach den Ansprüchen 1 und 2, dadurch gekennzeichnet, daß die Fasern bzw. Whisker im beanspruchungsseitigen Abschnitt (7) des Bewehrungskörpers (4) überwiegend parallel zur Oberfläche verlaufen.

5. Gegossene Bauteile nach den Ansprüchen 1 bis 4, dadurch gekennzeichnet, daß der Bewehrungskörper (4) im beanspruchungsseitigen Abschnitt (7) auf eine Tiefe von 3 bis 5 mm mit keramischer Masse getränkt ist.

6. Gegossene Bauteile nach den Ansprüchen 1 bis 5, dadurch gekennzeichnet, daß der Volumenanteil der Fasern bzw. Whisker des Bewehrungskörpers (4) in Belastungsrichtung, vorzugsweise kontinuierlich, zunimmt.

7. Gegossene Bauteile nach den Ansprüchen 1 bis 6, dadurch gekennzeichnet, daß die Fasern bzw. Whisker an ihren Berührungspunkten miteinander versintert oder verklebt sind.

## Revendications

1. Eléments moulés pour des moteurs à combustion interne, délimitant la chambre de combustion, tels que pistons (1) et culasses de cylindre, en un matériau métallique léger (5) et dans les régions superficielles desquels, soumises à l'usure et/ou à une grande contrainte thermique, sont incorporées des corps de renforcement ou armatures (4) en fibres ou en barbes céramiques non tissées, les fibres ou les barbes ayant un diamètre de 0,5 à 5 μm et un rapport du diamètre à la longueur de 10 à 100 et occupant un volume représentant de 10 à 50 % du volume total de l'armature, et les pores ouverts de la texture (6) des fibres et des barbes étant emplis dans la partie (9), du côté éloigné de celui soumis aux sollicitations, d'une couche d'un matériau métallique léger, caractérisés en ce que les pores ouverts de la texture (6) de fibres et de barbes, dans la partie (7), du côté qui est sollicité, sont emplis d'une couche, de 1 à 20 mm d'épaisseur, d'une masse céramique durcie ayant une faible porosité et, dans la région de transition (8), d'une couche, de 0,5 à 3 ma d'épaisseur, formée de la masse céramique et du matériau métallique léger.

2. Eléments moulés suivant la revendication 1, caractérisés en ce que le volume des fibres et des barbes représente de 10 à 30 % du volume total de l'armature (4).

3. Eléments moulés suivant la revendication 1 ou 2, caractérisés en ce que les fibres et les barbes sont disposées de maniere aléatoire.

4. Eléments moulés suivant la revendication 1 ou 2, caractérisés en ce que les fibres et les barbes, dans la partie (7) de l'armature (4), qui est du côté soumis aux sollicitations, s'étendent d'une manière prépondérante parallèlement à la surface.

5. Eléments moulés suivant l'une des revendications 1 à 4, caractérisés en ce que l'armature (4) est imprégnée, dans la partie (7) se trouvant du côté soumis aux sollicitation, d'une masse céramique jusqu'à une profondeùr de 3 à 5 mm.

6. Eléments moulés suivant l'une des revendications 1 à 5, caractérisés en ce que la proportion en volume des fibres et des barbes de l'armature (4) augmentent, de préférence d'une manière continue, dans le sens de la contrainte.

7. Eléments moulés suivant l'une des revendications 1 à 6, caractérisés en ce que les fibres et les barbes sont frittées ou collées les unes aux autres en leurs points de contact.

## Claims

1. Cast components, defining the combustion chamber, for internal combustion engines, such as pistons (1) and cylinder heads, made of light alloys (5), in the surface regions of which compounds which are subjected to stress by wear and/or by high thermal stress reinforcement bodies (4) consisting of non-woven ceramic fibres or whiskers are cast in, with the fibres or whiskers having a diameter of 0.5 to 5 µm and a diameter-to-length ratio of 10 to 100 and occupying a volume of 10 to 50%, relative to the total volume of the reinforcement body, and the open pores of the fibre or whisker structure (6) in the section (9) facing away from the stress being filled with a layer of the light alloy, characterised in that the open pores of the fibre or whisker structure (6) in the section (7) facing the stress are filled with a layer 1 to 20 mm thick of a hardened ceramic material having a low porosity and in the region of transition (8) are filled with a layer having a thickness of 0.5 to 3 mm formed from the ceramic material and the light alloy.

2. Cast components according to Claim 1, characterised in that the volume of the fibres or whiskers is 10 to 30%, relative to the total volume of the reinforcement body (4).

3. Cast components according to Claims 1 and 2, characterised in that the fibres or whiskers are randomly arranged.

4. Cast components according to Claims 1 and 2, characterised in that the fibres or whiskers in that section (7) of the reinforcement body (4) which is facing the stress predominantly extend parallel to the surface.

5. Cast components according to Claims 1 to 4, characterised in that the reinforcement body (4) in the section (7) facing the stress is impregnated to a depth of 3 to 5 mm with ceramic material.

6. Cast components according to Claims 1 to 5, characterised in that the proportion by volume of the fibres or whiskers of the reinforcement body (4) in the direction of loading increases, preferably continuously.

7. Cast components according to Claims 1 to 6, characterised in that the fibres or whiskers are sintered or adhesively joined together at their points of contact.

FIG. 1

FIG. 2